(19) Europäisches Patentamt / European Patent Office / Office européen des brevets

(11) **EP 2 918 975 A1**

(12) # EUROPEAN PATENT APPLICATION

(43) Date of publication:
**16.09.2015 Bulletin 2015/38**

(21) Application number: **15159116.1**

(22) Date of filing: **13.03.2015**

(51) Int Cl.:
*G01C 22/00* (2006.01)          *H02N 2/18* (2006.01)
*F03G 7/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **13.03.2014 IT TO20140202**

(71) Applicant: **STMicroelectronics S.r.l.
20864 Agrate Brianza (MB) (IT)**

(72) Inventors:
• **Gasparini, Alessandro**
  **20095 Cusano Milanino (IT)**
• **Ramorini, Stefano**
  **20010 Arluno (IT)**
• **Cattani, Alberto**
  **21040 Cislago (IT)**

(74) Representative: **Nannucci, Lorenzo et al
Studio Torta S.p.A.
Via Viotti, 9
10121 Torino (IT)**

(54) **Energy scavenging step-counter device and related step-counting method**

(57)    A step-counter device (10) for detecting and counting the steps taken by a user is provided with: a transducer (2), which generates an electrical transduction signal ($S_{transd}$) as a function of the mechanical activity generated during the steps; an energy scavenging system (5, 6), coupled to the transducer (12) for generation of electrical energy starting from the mechanical activity generated during the steps, in order to supply an output supply signal ($V_{out}$) starting from the electrical transduction signal ($S_{transd}$); a voltage-regulating stage (7), which generates a regulated supply signal ($V_{reg}$) starting from the output supply signal ($V_{out}$); and a transmission stage (9), supplied by the voltage-regulating stage (7) for wireless transmission of information associated to counting. The transmission stage (9) transmits to the outside world a count-increment signal upon exceeding of a first threshold ($V_{th1}$) by the regulated supply signal ($V_{reg}$), wherein completion of the transmission is indicative of the occurrence of a step.

FIG. 7

## Description

The present invention is directed to a step-counter device, a so-called "pedometer", provided with energy scavenging (or energy-harvesting) operation, thus having self-supply capability, i.e., being able to autonomously provide for its own supply of electrical energy. The present invention further relates to a step-counting method.

Step-counter devices are known, which, either worn or otherwise carried by a user, enable measurement of the number of steps taken and calculation of the distance travelled, as well as providing additional information, such as for example average speed or consumption of calories.

Step-counter devices are, for example, used in inertial navigation systems (the so-called "dead-reckoning" systems) applied to humans, in applications in the clinical field (for example, rehabilitation), and in general in the fitness field (as instruments for monitoring physical activity performed by the user).

In particular, step-counter devices are known, using integrated accelerometers of the MEMS (Micro-ElectroMechanical System) type for detecting steps.

These devices have particularly compact dimensions, so that they may be conveniently worn by the user, for example being integrated in the user footwear.

The aforesaid step-counter devices implement a method for detecting steps based on the analysis of the pattern of a vertical acceleration signal that is generated during the various phases of the gait cycle, due to impact of the foot on the ground, and that is detected by the accelerometer fixed with respect to the body of the user. In particular, occurrence of a step is determined by identifying acceleration peaks that appear in the acceleration signal, and these peaks are identified by comparing the acceleration signal with a given reference threshold.

Notwithstanding the use of MEMS sensors, with reduced energy consumption, known step-counter devices require a source of supply, typically a battery, for their use and for transmission of the information detected to external devices (for example, a portable electronic apparatus, such as a smartphone, a PDA, a tablet, a digital audio player, a photographic camera, or a video camera).

Further known are solutions for scavenging energy from environmental energy sources, and in particular for conversion of mechanical energy originating from such sources into electrical energy. Such solutions have aroused considerable interest in a wide range of technological fields, given the ever-increasing demand for miniaturization of electronic systems, in particular portable ones, and the corresponding need for supplying these electronic systems with batteries of small dimensions or, wherever possible, with supply sources of their own (the so-called "self-supply"), without the aid of additional energy sources (for example, one or more batteries).

Mechanical energy is converted by one or more energy scavenging transducers (for example, piezoelectric or electromagnetic transducers) into electrical energy, which may then be used, after appropriate operations of conversion and processing, for supplying an electrical load. In this way, the same electrical load does not require batteries or other additional supply systems. For instance, low-frequency vibrations, such as for example mechanical vibrations in systems with moving parts, may constitute a valid source of energy.

For instance, systems have been proposed for recovery of energy from the human gait, by appropriate energy-harvesting systems housed inside, or coupled to, the shoes of a user.

In this regard, the following documents may for example be cited: "Shoe-mounted PVDF Piezoelectric Transducer for Energy Harvesting" by D. Fourie, MIT Undergraduate Research Journal 19, pp. 66-70, Spring 2010; or "Energy Scavenging with Shoe-Mounted Piezoelectrics" by N.S. Shenck, J.A. Paradiso, Micro, IEEE, vol. 21, No. 3, pp. 30-42, May/June 2001.

The above systems envisage, by piezoelectric transducers, recovery of part of the mechanical energy dissipated when the foot strikes the ground during walking. The energy recovered may, for example, be used for supplying portable electronic devices, or else for activating and sustain wireless transmission of information.

In patent application No. US 14/034.764, filed on September 24, 2013 (claiming priority from patent application No. TO2012A000833, filed on September 26, 2012 in the name of the present Applicant), in order to improve step-counter devices of a known type, the use has been proposed, in a step-counter device, of an energy-harvesting system (the so-called "harvester" or "scavenger"), which enables recovery of the mechanical energy associated to the walking step and the use of the resulting electrical energy for carrying out step detection operations.

In particular, the solution proposed in the aforesaid patent application envisages implementing, in the step-counter device, an energy scavenging system, including a transducer of mechanical energy into electrical energy, in particular of an electromagnetic type, and use of the same transducer as a sensor for detecting the step of the user, on the basis of which step counting may be carried out (step counting is indeed a function of processing of the transduced signal).

The step-counter device is thus extremely compact and efficient from the energy standpoint, given that it has self-supply capability, without the need for resorting to an external supply source, for example a battery, and without the need for further sensors for step detection.

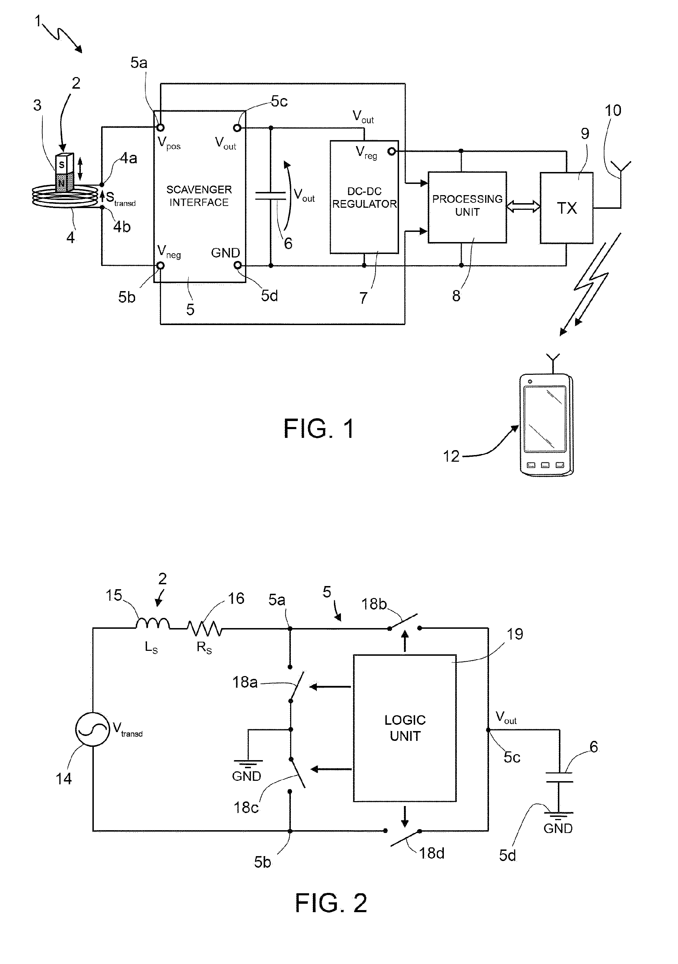

As illustrated in Figure 1, the aforesaid step-counter device, designated as a whole by 1, comprises a transducer 2 for energy scavenging, for example of an electromagnetic type, illustrated schematically and constituted in a per se known manner by a body 3, having permanent magnetization, configured to move within a coil 4, in response to mechanical stresses coming from the external environment, thus causing generation of a transduction signal $S_{transd}$, in particular a voltage signal, between the output terminals 4a, 4b of the same coil 4.

In particular, the transducer 2 is designed to be coupled to a shoe of a user, in such a way as to be subject to mechanical stresses due to the steps taken by the user and to the impact of the foot on the ground.

The step-counter device 1 further comprises a scavenger-interface stage 5, and a capacitive storage element 6.

The scavenger-interface stage 5 has a first input terminal 5a and a second input terminal 5b electrically coupled to a respective output terminal 4a, 4b of the transducer 2 for receiving the transduction signal $S_{transd}$, and a first output terminal 5c and a second output terminal 5d, connected between which is the storage capacitor 6; an output voltage $V_{out}$ is present between the same output terminals.

The step-counter device 1 further comprises: a voltage-regulating stage 7, for example constituted by a DC/DC converter, which receives at its input the output voltage $V_{out}$ and supplies a regulated voltage $V_{reg}$, for example having a value of 1.8 V; a processing unit 8, for example a microprocessor or microcontroller unit (or similar computing unit, for example including an FPGA - field-programmable gate array); and a transmission stage 9, coupled to a transmitting antenna 10, configured for radio (or wireless) transmission.

The processing unit 8 is supplied by the regulated voltage $V_{reg}$ (generated based on the transduction signal $S_{transd}$) and is further connected to the first and second input terminals 5a, 5b of the interface stage 5 for receiving the same transduction signal $S_{transd}$. The processing unit 8 is configured to execute an appropriate algorithm for detecting the occurrence of a step as a function of the characteristics of the aforesaid transduction signal $S_{transd}$ generated by the transducer 2 for performing the function of counting the steps of the user.

The processing unit 8 is further configured to actuate the transmission stage 9, and the corresponding transmitting antenna 10, for remote wireless transmission of the processed information regarding counting of the steps of the user as a function of the transduction signal $S_{transd}$, for example with Bluetooth (BT) transmission technology, or other technology of a known type, for example IR, Wi-Fi, NFC, or the like.

As illustrated schematically, this information may be sent to a portable electronic apparatus 12, such as for example a smartphone, a tablet, a phablet, a portable computer, a digital audio player, a photographic camera, or a video camera, including a processor or similar processing device, for display by the user and/or for execution of further processing operations and activation of functions of the same portable electronic apparatus 12.

The step-counter device 1 may comprise a single package, designed to house all the elementary components described previously and designed to be coupled in an appropriate way to the user, for example to be arranged within the shoe, embedded in the sole; alternatively, the step-counter device 1 may comprise distinct packages, for example for the transducer 2 and for the remaining electronic circuitry associated thereto.

The scavenger-interface stage 5 is in general configured to convert the transduction signal $S_{transd}$, generated by the transducer 12 following upon the action of transduction of the mechanical energy associated to the step, into a form useful for energy scavenging and subsequent generation of the regulated voltage $V_{reg}$ by the voltage-regulating stage 7, with the aim of maximizing the efficiency of conversion and in general of the energy scavenging action.

For instance, the scavenger-interface stage 5 is made as described in patent application No. US2012/307538 A1, filed in the name of the present Applicant.

As illustrated in Figure 2, the scavenger-interface stage 5 provides in this case a switching converter of a fully active boost type, which directly exploits the intrinsic inductance of the transducer 2, the latter being indeed modelled as a voltage generator 14, designed to supply a voltage $V_{transd}$ (corresponding to the transduction signal $S_{transd}$) and connected in series to an inductor 15, having a characteristic inductance $L_s$, and to a resistor 16, having a characteristic resistance $R_s$.

The scavenger-interface stage 5 comprises two pairs of switches, functionally coupled to one another, and a logic control unit, designed to control switching thereof for cyclic management of storage of energy in the inductor 15 and its transfer to the storage capacitor 6, for both polarities, positive and negative, of voltage $V_{transd}$. The switches are active switches, made with high-voltage transistors, for example N-channel MOSFETs.

In detail, a first pair of switches includes: a first switch 18a, connected between the first input terminal 5a and a reference terminal GND (for example, connected to the electrical ground of the circuit); and a second switch 18b, connected between the first input terminal 5a and the first output terminal 5c and to the storage capacitor 6 (the second output terminal 5d is connected to the reference terminal GND).

The second pair of switches includes: a third switch 18c, connected between the second input terminal 5b and the reference terminal GND; and a fourth switch 18d, connected between the same second input terminal 5b and the first output terminal 5c and to the storage capacitor 6.

Each switch 18a-18d has a respective control terminal that receives a respective control signal from the logic control unit, designated by 19.

In the case of positive polarity of voltage $V_{transd}$, the logic control unit 19 keeps the third switch 18c closed and the fourth switch 18d open and controls switching of the first pair of switches 18a, 18b, cyclically storing energy in the inductor 15, by closing the first switch 18a (with the second switch 18b open), and subsequently causing transfer thereof to the storage capacitor 6, by closing the second switch 18b (and opening the first switch 18a).

Operation is altogether symmetrical and specular as regards the negative polarity of the voltage $V_{transd}$, with the logic control unit 19 that keeps the first switch 18a closed and the second switch 18b open, and controls switching of the second pair of switches 18c, 18d storing cyclically energy in the inductor 15, by closing the third switch 18c, and subsequently causing transfer thereof to the storage capacitor 6, by closing the fourth switch 18d.

Switching timing of switches 18a-18d is managed by the logic control unit 19 in such a way as to maximize the coupling efficiency between the transducer 2 and the scavenger-interface stage 5, and the efficiency of the transfer of energy to the storage capacitor 6.

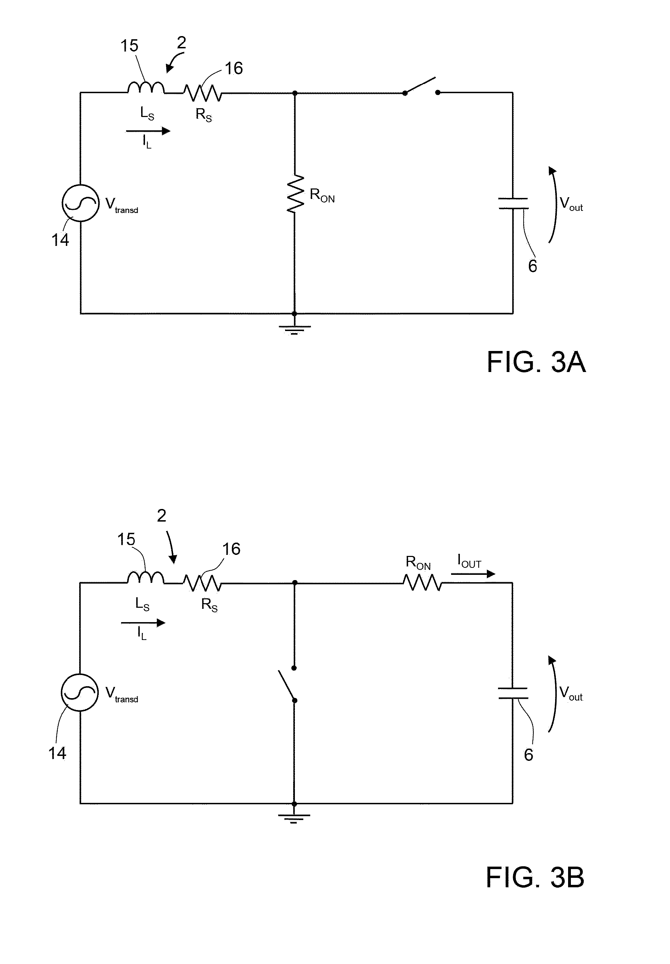

To explain the control algorithm executed by the logic control unit 19 reference may be made, given the symmetry of the circuit, to the circuit model of half of the circuit, shown in Figures 3a and 3b, respectively in the case of the operating condition of storage of energy in the inductor 15, and in the case of the operating condition of transfer of the energy stored to the storage capacitor 6 (in this model, $R_{ON}$ is the resistance in a closed state of the first switch 18a or the second switch 18b, each time driven into a closing condition).

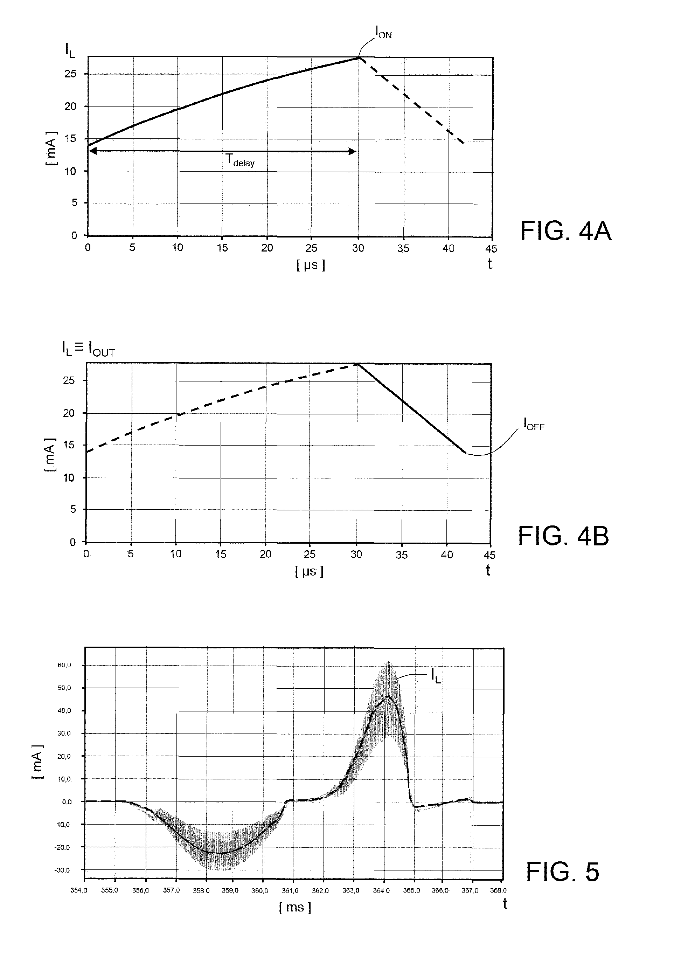

In particular, also with reference to Figure 4a, related to the operating condition of Figure 3a, during storage of energy in the inductor 15, the current circulating in the same inductor 15, designated by $I_L$, increases until it reaches a peak value $I_{ON}$, after a time interval $T_{delay}$ has elapsed, starting from the start of the storage operating condition. The logic control unit 19 controls, by means of the switches, the end of the storage operating condition after the time interval $T_{delay}$ has elapsed and a minimum threshold value $I_{th}$ has been exceeded by the current in the inductor $I_L$.

The threshold value $I_{th}$ is chosen much lower than the peak value $I_{ON}$ that is expected to be reached in the application in which the circuit is used. For instance, assuming that peak values $I_{ON}$ of approximately 150 mA are reached, the threshold value $I_{th}$ may be chosen to be comprised between approximately 5 and 10 mA (given that the choice of a threshold value $I_{th}$ too close to the peak value $I_{ON}$ entails a low efficiency).

Next, as illustrated in Figure 4b, in the operating condition of transfer of energy, the current in the inductor $I_L$, which coincides with the current, designated by $I_{OUT}$, that flows in the storage capacitor 6, decreases until it reaches a lower limit value $I_{OFF}$, whereby the logic control unit 19 controls a new switching of the switches, to return, in a cyclic way, into the operating condition of storage of energy in the inductor 15.

In particular, the aforesaid lower limit value $I_{OFF}$ is equal to a fraction k (with k > 1) of the peak value $I_{ON}$

$$I_{OFF} = I_{ON}/k$$

As discussed in detail in the aforesaid patent application No. US 2012/307538 A1, the logic control unit 19, with an appropriate choice of the time interval $T_{delay}$ and of the factor k, is able to act upon the mean value and the ripple of the current in the inductor $I_L$.

In particular, the logic control unit 19 is able to determine optimal values of time interval $T_{delay}$ and of factor k such as to minimize the ripple in the pattern of the inductor current $I_L$, represented with a solid line in Figure 5, and maximize matching between the inductor current $I_L$ and the current on a matched load (represented with a dashed line in the same Figure 5).

The logic control unit 19 thus ensures the best matching ($\eta \approx 1$) between the transducer 2 and the scavenger-interface stage 5 (the output of the transducer 2 and the input of the scavenger-interface stage 5 have, that is, substantially the same impedance), maximizing the efficiency of transfer of power between input and output of the scavenger-interface stage 5, in each cycle of charging/discharging of the inductor 15.

As previously highlighted, the processing unit 8 of the step-counter device 1, which is appropriately supplied thanks to the action of the scavenger-interface stage 5 starting from the transduction signal $S_{transd}$, is able to detect the occurrence of a step as a function of processing of the characteristics of the same transduction signal $S_{trand}$.

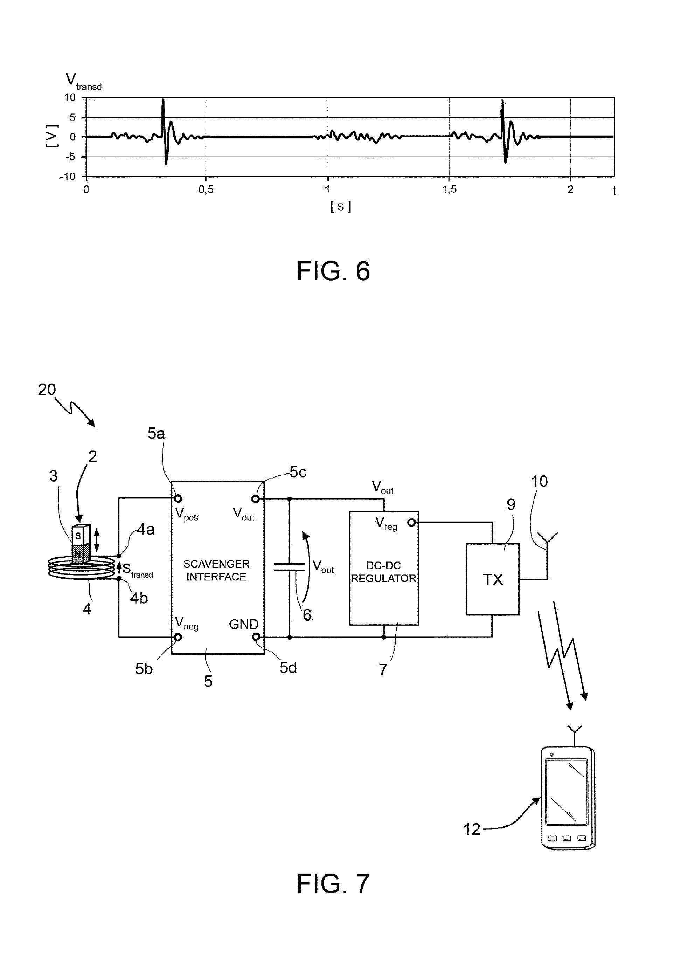

The transduction signal $S_{transd}$ generated by the transducer 2, the voltage plot of which is shown in Figure 6, has indeed a characteristic pattern at each step taken by the user.

In particular, the aforesaid pattern envisages that a significant activity occurs (in terms of amplitude and/or duration of the signal) both in the positive portion of the signal and in the negative portion of the same signal, within a given analysis time interval, as a result of the initial impact of the foot with the ground and of the subsequent transfer of the weight of the body onto the other foot. For instance, this pattern envisages the presence of a first positive peak followed by a negative peak substantially of the same amplitude, and by a second positive peak of low amplitude, in turn followed by a subsequent step of rebound and settling (within the analysis time interval).

The processing unit 8 thus executes an appropriate algorithm (by executing appropriate software instructions) for recognizing the occurrence of the aforesaid pattern in the transduction signal $S_{transd}$ and consequently detecting the occurrence of a step taken by the user.

The aforesaid algorithm in general envisages monitoring, by the processing unit 8, of the signals having positive polarity and negative polarity, respectively (and

thus designated by $V_{pos}$ and $V_{neg}$) present, respectively, on the first input terminal 5a and on the second input terminal 5b of the scavenger-interface stage 5 (or, likewise on the output terminals 4a, 4b of the transducer 2).

Due to the switching operation of the scavenger-interface stage 5, the aforesaid signals have a so-called "choppered" pattern, i.e., they are constituted by a plurality of pulses with short duration, that is a function of the switching duty cycle, and an amplitude that is, in general, a function of the value of the output voltage $V_{out}$ stored in the storage capacitor 6.

In particular, the value of the positive signal $V_{pos}$ is substantially zero during the operating condition of storage of energy in the inductor 15 (i.e., during a first portion of the switching period), and becomes almost instantaneously substantially equal to the output voltage $V_{out}$ on the storage capacitor 6 during the subsequent operating condition of transfer of energy to the storage capacitor 6 (i.e., during the second portion of the switching period); similar considerations apply to the negative signal $V_{neg}$.

The envelope of the positive and negative signals $V_{pos}$, $V_{neg}$ thus follows the plot of the output voltage $V_{out}$ on the storage capacitor 6. Furthermore, the positive and negative signals $V_{pos}$, $V_{neg}$ themselves are substantially zero, when the transduction signal $S_{transd}$ is also substantially zero, given that the current in the inductor $I_L$ does not reach the threshold value $I_{th}$, and the switching operation is interrupted.

The processing unit 8 is thus configured to determine the occurrence of a step in the case where a number of positive pulses (or, likewise, negative pulses) greater than a given counting threshold is detected - i.e., the presence of a significant number of positive (or negative) pulses is found - and further (within a pre-set time interval) a number of negative (or, likewise, positive) pulses greater than the counting threshold is consecutively detected - i.e., the presence of a significant number of negative (or positive) pulses is found.

Once occurrence of a step has been determined, the processing unit 8 enables, as a function of said determination, a transmission operation, whereby information related to the increase of step count is sent to the portable apparatus 12 by the transmission stage 9; the portable apparatus 12 receives the transmission and processes its content to extract the step counting information.

Advantageously, in the solution described previously, the step-counter device 1 may ideally be self-supplied, thanks to the presence of the efficient energy scavenging system, which supplies sufficient energy for step detection and for transmission of the step-counting information to the outside world (for example, to a portable electronic apparatus by Bluetooth wireless transmission).

The number of components required is minimized, thanks to the absence of a battery or other electrical supply sources, and to the fact that the same transducer is used both for operations of energy scavenging from walking and for step detection and the consequent counting of the steps taken by the user as a function of the transduction signal.

For step detection, no additional sensors, such as for example accelerometer sensors, are thus required. Consequently, the energy demand for operation of the step-counter device is minimized.

However, the solution described has some potentially disadvantageous characteristics, which may preclude the possibility of fully achieving the aforesaid advantages.

In particular, the present Applicant has found that the aforesaid step-counting algorithm has a certain amount of complexity, which may entail the possibility of counting errors, and further a consumption of energy, by the processing unit 8, which could be excessive in certain situations. For instance, the situation could arise in which the electrical energy supplied by the scavenger-interface stage 5 and stored in the storage capacitor 6 is not sufficient for guaranteeing supply of the processing unit 8 for the time required for execution of the aforesaid algorithm.

In general, the need is thus felt for further improvement of step-counter devices, in particular as regards the related energy efficiency and counting reliability.

The aim of the present invention is to meet, at least in part, the above need.

According to the present invention, an energy scavenging step-counter device, and a corresponding step-counting method are consequently provided, as defined in the annexed claims.

For a better understanding of the present invention, preferred embodiments thereof are now described, purely by way of nonlimiting example and with reference to the attached drawings, wherein:

- Figure 1 shows a block diagram of a step-counter device provided with an energy scavenging system;
- Figure 2 shows an equivalent circuit diagram of an energy scavenger interface stage in the step-counter device of Figure 1;
- Figures 3a and 3b are circuit models of the interface stage of Figure 2, in respective operating conditions;
- Figures 4a and 4b show plots of electric currents in the interface stage of Figure 2, referred to the circuit models of Figures 3a and 3b, respectively;
- Figure 5 shows the plot of an electrical output quantity in the interface stage of Figure 2;
- Figure 6 shows the plot of an electrical transduction signal generated by a transducer of the step-counter device of Figure 1;
- Figure 7 shows a block diagram of a step-counter device provided with an energy scavenging system, according to a first embodiment of the present solution;
- Figure 8 shows a flowchart of step-counting operations performed in the device of Figure 8;

- Figure 9 shows a block diagram of a step-counter device provided with an energy scavenging system, according to a second embodiment of the present solution;
- Figure 10 shows a flowchart of step-counting operations performed in the device of Figure 9; and
- Figures 11-13 show the plots of electrical quantities associated to step counting.

With reference to Figure 7, a description of a step-counter device, designated by 20, according to a first embodiment of the present solution is now presented (the same reference numbers will be used hereinafter for designating elements that are similar to corresponding elements described previously and that will not be described again).

The step-counter device 20 has a structure substantially similar to the one described with reference to Figure 1, but with the difference that a processing unit is not envisaged in this embodiment. The step-counter device 20 thus comprises: a transducer 2, for energy scavenging, for example of an electromagnetic type and constituted by a permanently magnetized body 3 configured for moving within a coil 4 in response to mechanical stresses from the external environment, thus causing generation of a transduction signal $S_{transd}$, in particular a voltage, between the output terminals 4a, 4b of the coil 4; a scavenger-interface stage 5, having a first input terminal 5a and a second input terminal 5b electrically coupled to a respective output terminal 4a, 4b of the transducer 2 for receiving the transduction signal $S_{transd}$, and a first output terminal 5c and a second output terminal 5d, between which an output voltage $V_{out}$ is present; a capacitive storage element 6, connected between the aforesaid first and second output terminals 5c, 5d; a voltage-regulating stage 7, for example constituted by a DC/DC converter, which receives at its input the output voltage $V_{out}$ and supplies at its output a regulated voltage $V_{reg}$, for example having a value of 1.8 V; and a transmission stage 9, supplied by the voltage-regulating stage 7 and coupled to a transmitting antenna 10, configured for wireless transmission, for example using the Bluetooth protocol.

According to a particular aspect of the present solution, unlike known solutions, no processing of the transduction signal $S_{transd}$ is carried out for determining the occurrence of a step; in fact, it is the very generation of electrical energy due to the step mechanical action, which results in the generation of the regulated voltage $V_{reg}$, that is used for indicating the occurrence of a step.

The transmission stage 9 is in fact supplied by the regulated voltage $V_{reg}$ and, once the regulated voltage $V_{reg}$ itself reaches a desired value, for example 1.8 V, it transmits to the outside world, for example by Bluetooth wireless communication, a signal indicating occurrence of the step. Consequently, the successful "transmission" event is designed to indicate occurrence of a step.

A portable electronic apparatus 12, such as for example a smartphone, a tablet, a phablet, a portable computer, a digital audio player, a photographic camera, or a video camera, on the basis of the reception of the aforesaid transmission, is thus able to increment a step-counting signal.

The aforesaid feature advantageously enables considerable simplification of the step detection, eliminating the signal processing required in prior art solutions, and thus the demand for electrical energy associated to the detection process is considerably reduced.

A particular aspect of the present solution envisages that radio transmission is kept active for a preset time interval, in the presence of sufficient electrical energy, i.e., with the regulated voltage $V_{reg}$ that has a value sufficient to enable radio transmission. After this period, a load is activated, for example a load of a resistive type, for the voltage-regulating stage 7, which enables progressive reduction of the value of the regulated voltage $V_{reg}$, as well as enabling the system to be brought back into the condition of being able to detect a new step.

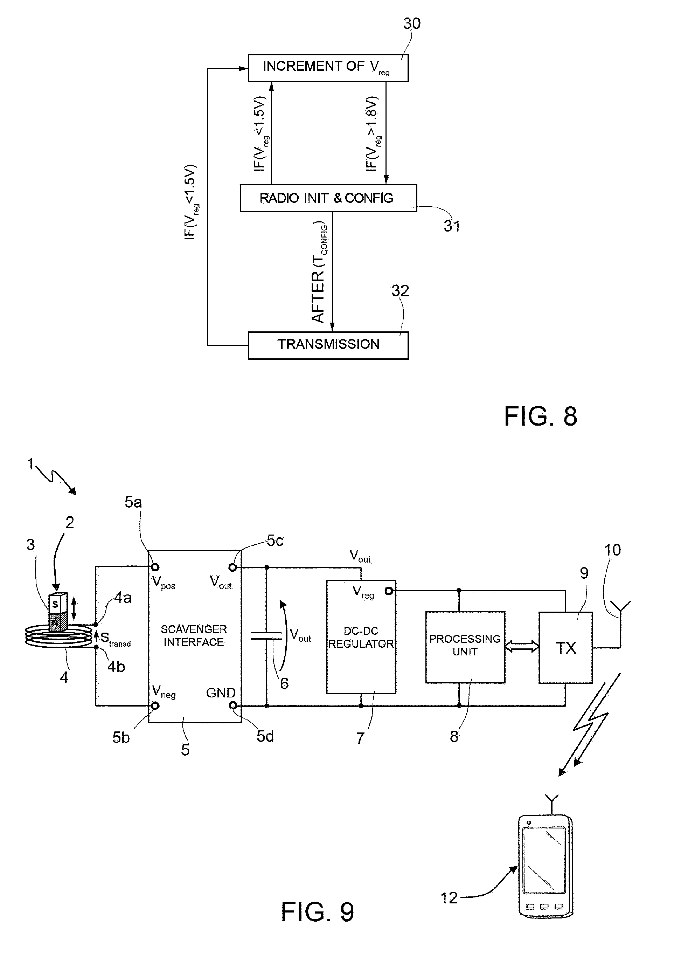

In greater detail, and with reference to Figure 8, the solution described first envisages (step 30) that the regulated voltage $V_{reg}$ will reach, as a result of the operation of harvesting of mechanical energy and transformation thereof into electrical energy, a value sufficient for the transmission operation, i.e., not less than a given upper threshold value $V_{th1}$, for example 1.8 V.

When the regulated voltage $V_{reg}$ exceeds the upper threshold value $V_{th1}$, from step 30 a step 31 is reached, where the transmission stage 9, supplied by the regulated voltage $V_{reg}$, executes operations of initialization and configuration (of a known type, not described in detail herein). In particular, in this embodiment, the transmission stage 9 is able to configure itself for radio transmission. In the case where the value of the regulated voltage $V_{reg}$ is less than a given lower threshold value $V_{th2}$, for example 1.5 V, operation returns to step 30, for a sufficient increase of the same regulated voltage $V_{neg}$.

At the end of the configuration operations, in a step 32, subsequent to step 31, the transmission stage 9 transmits via radio to the outside world information associated to the increase of step counting (in the form of an appropriate signal), that may be received, for example, by the portable electronic apparatus 12. This information is solely a function of the fact that the value of the regulated voltage $V_{reg}$ has risen (and remains for the given interval) above the upper threshold value $V_{th1}$, and is not the result of signal processing operations (in particular of the transduction signal, here having solely an energy scavenging function).

Once again, also in this step 32, in the case where the value of the regulated voltage $V_{reg}$ is less than the lower threshold value $V_{th2}$, for example 1.5 V, operation returns to step 30, for a sufficient increase of the regulated voltage $V_{neg}$.

An aspect of the present solution envisages that the step of transmission by the transmission stage 9 remains active for a pre-set and fixed time interval, dependent on the characteristics of the same transmission stage 9.

Afterwards, a load, for example of a resistive type, is applied to remove any possible residual energy present in the system and cause the regulated voltage $V_{reg}$ to drop below the minimum value tolerated by the transmission stage 9 (equal to the lower threshold value $V_{th2}$) in such a way that the system will be ready and reset for sensing a subsequent step. For instance, the same transmission stage 9 may be configured to activate the resistive load for the voltage-regulating stage 7.

No additional checks or operations are thus envisaged for determining end of the transmission operation, which is instead determined by the end of the pre-set time interval (after which the aforesaid operations are repeated for sensing of a new step occurrence).

It should be noted that such a solution prevents the possibility of spurious signals being transmitted to the portable electronic apparatus 12 that might indicate erroneous step detection. In fact, the transmission is successful, and a signal for incrementing the step count is thus interpreted correctly by the receiver, only in the case where it is possible to execute the transmission until, the end of the time interval envisaged.

With reference to Figure 9, a further embodiment of the present solution is now described, which envisages the use of a processing unit, once again designated by 8, coupled to the transmission stage 9 and supplied by the regulated voltage $V_{reg}$.

The processing unit 8, however, does not have processing functions aimed at step detection (an operation that is carried out, as described previously), but only the function of control and management of the transmission stage 9, in the case where the same transmission stage 9 is not, for example, able to undergo self-configuration and autonomously carry out operations of initialization and configuration.

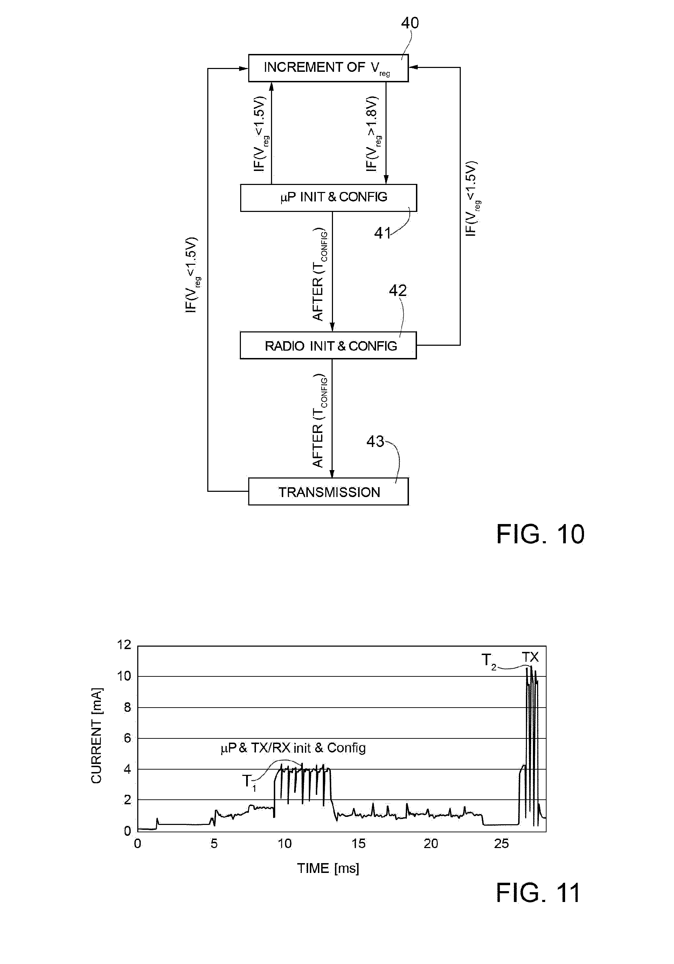

In this case (see also Figure 10), the solution described envisages once again (step 40) that the regulated voltage $V_{reg}$ reaches, as a result of the operation of harvesting of mechanical energy, a value sufficient for the operations of transmission, i.e., not lower than a given upper threshold value $V_{th1}$, for example 1.8 V.

When the regulated voltage $V_{reg}$ exceeds the upper threshold value $V_{th1}$, from step 40 a step 41 is reached, where the processing unit 8, appropriately supplied by the regulated voltage $V_{reg}$, executes operations of initialization and configuration (of a known type, here not described in detail). If in this step 41 the regulated voltage $V_{reg}$ drops below the lower threshold value $V_{th2}$, operation returns to step 40.

Once the configuration step ends, the processing unit 8 (at step 42) controls the transmission stage 9 to perform appropriate operations of initialization and configuration. Also in this step 42, in the case where the value of the regulated voltage $V_{reg}$ is lower than the lower

threshold value $V_{th2}$, operation returns to step 40 for an appropriate increase of the same regulated voltage $V_{reg}$.

At the end of the configuration operations, in a step 43, subsequent to step 42, the transmission stage 9 transmits via radio to the outside world the information of increase of step counting for the duration of the pre-set time interval (on the hypothesis that the regulated voltage remains above the lower threshold value $V_{th2}$). After this, the residual energy is discharged by application of the load, for example of a resistive type for the voltage-regulating stage 7 (so that the regulated voltage drops below the lower threshold value $V_{th2}$).

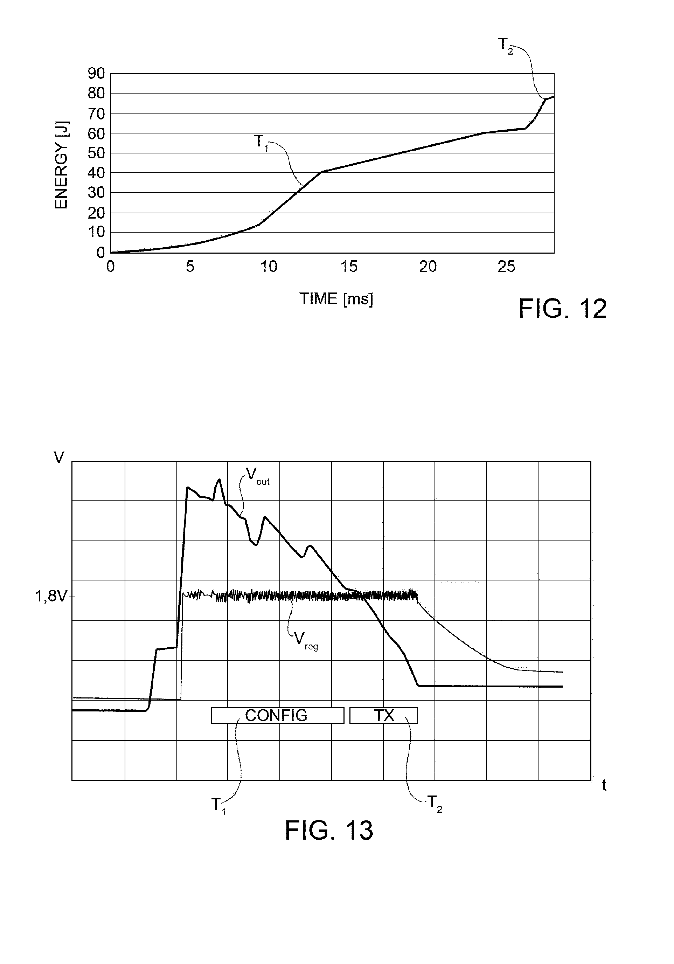

Figures 11 and 12 show, respectively, plots of the current and of the energy used by the step-counter device 20 during the operations described previously; in particular, $T_1$ is the time interval dedicated to the operations of initialization and configuration (by way of example, with reference to the second embodiment illustrated, where the processing unit 8 is present), whereas $T_2$ is the time interval dedicated to the operations of transmission of the step-counting information (and possible application of the load for discharging the residual energy present in the system).

The plots shows that, in the example illustrated, a minimal energy of just 70 $\mu$J is sufficient for proper transmission of the step-counting information, in the solution that envisages the presence of the processing unit 8. It is evident that the minimum value of energy is lower in the case where the solution does not envisage the use of processing unit 8.

Figure 13 further shows, by way of example, a possible time plot of the output voltage $V_{out}$ generated by the scavenger-interface stage 5, and of the regulated voltage $V_{reg}$, where once again $T_1$ is the time interval dedicated to the operations of initialization and configuration, and $T_2$ is the time interval dedicated to the operations of transmission of the step-counting information.

In particular, it may be noted that the regulated voltage $V_{reg}$, which is stable at a value sufficient to enable step-counting operations during the aforesaid intervals $T_1$ and $T_2$, decreases until it substantially goes to zero, starting from the end of the same interval $T_2$.

The advantages of the step-counter device and of the related step-counting method are clear from the foregoing discussion.

In general, it is emphasized once again that the solution described provides a step-counter device without batteries, in so far as it may be self-supplied thanks to the efficient system for scavenging mechanical energy, and furthermore without additional sensors, for example of an accelerometer type.

The step-counter device is improved as regards energy efficiency and reliability, for example in so far as it does not require any processing of signals (not even of the signal transduced by the energy scavenger interface) for sensing and counting the steps; it is in fact the correct and complete transmission of the count-increment signal by the transmission stage 9 that indicates occurrence of a step.

In particular, a possible embodiment does not even envisage a processing unit, given that no signal processing is required and given that a transmission stage is used capable of self-configuration and self-initialization. In this case, energy consumption proves to be even lower.

Furthermore, advantageously, the solution described enables detection of the occurrence of steps both when the user is running and when the user is walking.

Finally, it is clear that modifications and variations may be made to what has been described and illustrated herein, without thereby departing from the scope of the present invention, as defined in the annexed claims.

In particular, the solution described may be used also with different types of transducers, for example of a piezoelectric type, using in any case the same transducer both for energy scavenging and for step detection.

The scavenger-interface stage 5 could be different from what has been illustrated; for example, it could have a different circuit configuration, capable in any case of ensuring generation of the regulated voltage $V_{reg}$, at least for supply of the transmission stage 9 (and, if present, of the processing unit 8).

Furthermore, it is evident that the portable electronic apparatus 12, which receives the step-counting signal from the step-counter device 20, may be configured to carry out further processing operations starting from the same signal.

**Claims**

1. A step-counter device (20) for counting the steps of a user, comprising:

   a energy scavenging transducer (2), configured to generate an electrical transduction signal ($S_{transd}$) as a function of the mechanical activity generated during the steps;
   an energy scavenging stage (5, 6), coupled to said transducer (2) to generate electrical energy starting from the mechanical activity generated during each step, configured to supply an output supply signal ($V_{out}$) starting from said electrical transduction signal ($S_{transd}$);
   a regulator stage (7), configured to generate a regulated supply signal ($V_{reg}$) starting from said output supply signal ($V_{out}$); and
   a radio transmission stage (9), supplied by said regulator stage (7),
   **characterized in that** said transmission stage (9) is configured to implement a transmission, to the outside world, of a count-increment signal due to exceeding of a first threshold ($V_{th1}$) by the regulated supply signal ($V_{reg}$), said transmission having a pre-set duration, whose completion is indicative of the occurrence of a step and designed to increment said step counting.

2. The device according to claim 1, wherein said transmission stage (9) is configured to carry out an operation of initialization when the value of the regulated supply signal ($V_{reg}$) is higher than the first threshold ($V_{th1}$) and to carry out said transmission for a pre-set time interval, during which the value of the regulated supply signal ($V_{reg}$) is not lower than a second threshold ($V_{th2}$).

3. The device according to claim 2, wherein said transmission stage (9) is configured to cause an operation of discharge of a residual electrical energy, at the end of the pre-set time interval.

4. The device according to any one of the preceding claims, wherein said count-increment signal is not a function of any signal processing, on the basis of said electrical transduction signal ($S_{transd}$)

5. The device according to any one of the preceding claims, wherein said transmission stage (9) is self-configurable and able to carry out autonomously an initialization operation, when supplied by said regulated supply signal ($V_{reg}$) having a value higher than said first threshold ($V_{th1}$).

6. The device according to claim 5, wherein said transmission stage (9) is configured to start transmission of said count-increment signal after a time interval ($T_1$) associated to said initialization operation.

7. The device according to any one of the preceding claims, having no processing unit coupled to said transmission stage (9).

8. The device according to any one of claims 1-4, further comprising a processing unit (8), coupled to said transmission stage (9) and designed to configure said transmission stage (9) for transmission of said count-increment signal, when supplied by said regulated supply signal ($V_{reg}$) having a value higher than said first threshold ($V_{th1}$).

9. The device according to claim 8, wherein said processing unit (8) is configured so as not to carry out any signal processing, on the basis of said electrical transduction signal ($S_{transd}$).

10. The device according to any one of the preceding claims, wherein said transducer (2) is of an electromagnetic type and has a characteristic inductance ($L_s$); and wherein said energy scavenging stage (5, 6) comprises an interface stage (5), which has a first input terminal (5a) and a second input terminal (5b) coupled to said transducer (2) and is configured to define a switching converter using the characteristic inductance ($L_s$) of said transducer (2).

11. The device according to claim 10, wherein said energy scavenging stage (5, 6) comprises a storage capacitor (6) on which said output supply signal ($V_{out}$) is present, connected between a first output terminal (5c) and a second output terminal (5d) of said interface stage (5); and wherein said interface stage (5) comprises a logic control unit (19) and a switch assembly (18a-18d), whose switching is controlled by said logic control unit (19) for causing cyclically storage of energy in said inductor (15) in a first interval of a switching period, and transfer of energy onto said storage capacitor (6) in a second interval of the switching period, at both polarities, positive and negative, of the electrical transduction signal ($S_{transd}$)

12. The device according to claim 11, wherein said logic control unit (19) is configured to control switching of said switch assembly (18a-18d) to optimize a coupling efficiency between said transducer (2) and said interface stage (5).

13. The device according to any one of the preceding claims, designed to be coupled to an item of footwear of said user.

14. A system for counting the steps taken by a user, comprising the step-counter device (20) according to any of the preceding claims, and a processing device (12) configured to receive said count-increment signal and determine an increment of said step counting as a function of completion of said transmission, having a pre-set duration.

15. A method for counting the steps taken by a user, comprising the steps of:

    performing an operation of transduction, for generating an electrical transduction signal ($S_{transd}$) as a function of the mechanical activity generated during the steps;
    performing an energy scavenging operation starting from said mechanical activity generated during each step, for generation of an output supply signal ($V_{out}$) starting from said electrical transduction signal ($S_{transd}$); and
    generating a regulated supply signal ($V_{reg}$) starting from said output supply signal ($V_{out}$),
    **characterized by** comprising the step of implementing a transmission to the outside world of a count-increment signal due to exceeding of a first threshold ($V_{th1}$) by the regulated supply signal ($V_{reg}$), wherein said transmission has a pre-set duration, whose completion is indicative of the occurrence of a step and designed to increment said step counting.

16. The method according to claim 15, wherein the transmission step is executed as a function of the fact that the value of the regulated supply signal ($V_{reg}$) increases above the first threshold ($V_{th1}$) and is not lower than a second threshold ($V_{th2}$) for a pre-set time interval.

17. The method according to claim 15 or claim 16, wherein the transmission step is not a function of any signal processing, on the basis of said electrical transduction signal ($S_{transd}$).

18. The method according to any of the claims 15-17, comprising receiving said count-increment signal and determining an increment of said step counting as a function of completion of said transmission, having a pre-set duration.

FIG. 1

FIG. 2

FIG. 3A

FIG. 3B

FIG. 4A

FIG. 4B

FIG. 5

12

FIG. 6

FIG. 7

**FIG. 8**

**FIG. 9**

40

INCREMENT OF $V_{reg}$

IF($V_{reg}$ <1.5V)    IF($V_{reg}$ >1.8V)

μP INIT & CONFIG

41

IF($V_{reg}$ <1.5V)

AFTER ($T_{CONFIG}$)

42

RADIO INIT & CONFIG

IF($V_{reg}$ <1.5V)

AFTER ($T_{CONFIG}$)

43

TRANSMISSION

## FIG. 10

## FIG. 11

FIG. 12

FIG. 13

Europäisches
Patentamt

European
Patent Office

Office européen
des brevets

## EUROPEAN SEARCH REPORT

Application Number

EP 15 15 9116

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 530 822 A1 (ST MICROELECTRONICS SRL [IT]) 5 December 2012 (2012-12-05) * paragraphs [0018] - [0019], [0029], [0038], [39122], [0128]; claim 1; figures 3, 4b * | 1-18 | INV. G01C22/00 H02N2/18 F03G7/00 |
| A | JP 2007 004577 A (SEIKO EPSON CORP) 11 January 2007 (2007-01-11) * paragraphs [0008], [0011] * | 1-18 | |
| A | US 2010/090477 A1 (KEATING JOSEPH A [US] ET AL) 15 April 2010 (2010-04-15) * paragraphs [0003], [0006], [0013] - [0015], [0027] - [0028], [0030], [0033] * | 1-16 | |
| A | EP 2 458 338 A1 (SILICON VALLEY MICRO E CORP [US]) 30 May 2012 (2012-05-30) * paragraphs [0010], [0013], [0022], [0024], [0026] * | 1-16 | |
| A | US 2013/191069 A1 (RAVINDRAN SOURABH [US]) 25 July 2013 (2013-07-25) * paragraphs [0002], [0023], [0049] * | 1-16 | TECHNICAL FIELDS SEARCHED (IPC) G01C A43B H02N A61B A63B F03G |

The present search report has been drawn up for all claims

| Place of search | Date of completion of the search | Examiner |
|---|---|---|
| The Hague | 7 July 2015 | Rocca, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 15 9116

This annex lists the patent family members relating to the patent documents cited in  the above-mentioned European search report.
The members are as contained in the European Patent Office EDP file on
The European Patent Office is in no way liable for these particulars which are merely given for the purpose of information.

07-07-2015

| Patent document cited in search report | | Publication date | Patent family member(s) | | Publication date |
|---|---|---|---|---|---|
| EP  2530822 | A1 | 05-12-2012 | EP | 2530822 A1 | 05-12-2012 |
| | | | US | 2012307538 A1 | 06-12-2012 |
| JP  2007004577 | A | 11-01-2007 | JP | 4702531 B2 | 15-06-2011 |
| | | | JP | 2007004577 A | 11-01-2007 |
| US  2010090477 | A1 | 15-04-2010 | CN | 102177647 A | 07-09-2011 |
| | | | EP | 2345145 A1 | 20-07-2011 |
| | | | JP | 2012505411 A | 01-03-2012 |
| | | | KR | 20110082035 A | 15-07-2011 |
| | | | US | 2010090477 A1 | 15-04-2010 |
| | | | WO | 2010042601 A1 | 15-04-2010 |
| EP  2458338 | A1 | 30-05-2012 | NONE | | |
| US  2013191069 | A1 | 25-07-2013 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 14034764 B
- IT TO20120833 A

- US 2012307538 A1

**Non-patent literature cited in the description**

- **D. FOURIE.** Shoe-mounted PVDF Piezoelectric Transducer for Energy Harvesting. *MIT Undergraduate Research Journal,* 2010, vol. 19, 66-70

- **N.S. SHENCK ; J.A. PARADISO.** Energy Scavenging with Shoe-Mounted Piezoelectrics. *Micro,* May 2001, vol. 21 (3), 30-42